# EUROPEAN PATENT SPECIFICATION

(11) **EP 0 439 313 B1**
(45) Date of publication and mention of the grant of the patent: **30.08.1995**
(21) Application number: 91300448.7
(22) Date of filing: 21.01.1991
(51) Int. Cl.: F16L 21/03, E21D 9/00, F16L 21/02

(54) **Pipe joints and couplings and parts thereof**
Rohrverbindungen, Kupplungen und Teile davon
Raccords de tuyaux, connexions et pièces de cela

(30) Priority: 25.01.1990 GB 9001770
(43) Date of publication of application: 31.07.1991
(73) Proprietor: PONT-A-MOUSSON SA, 54076 Nancy Cédex (FR)
(72) Inventor: Stevens, William Walter, Borrowash, Derbyshire (GB)
(74) Representative: Heath, Peter William Murray

(56) References cited:
- EP-A- 0 247 496
- EP-A- 0 257 287
- CH-A- 468 586
- DE-A- 2 257 835
- DE-A- 3 703 580

## Description

This invention relates to pipe joints and couplings and parts thereof, and more particularly to pipe joints and couplings and parts intended for use with jacking pipes.

Jacking or driven pipes are essentially used for underground installation in which, from a chamber constructed below ground level, a bore is driven generally parallel to the ground from within the structure, and pipes, for example intended in due course for carrying fluids, are driven into the bore from within the structure one after the other usually closely following (and often attached to) the bore driving apparatus, to provide a pipework lining to the bore. These pipes, known as jacking pipes, are usually provided with seals at their interconnections, to prevent the ingress of any fluid from without the pipeline, and similarly to prevent any leakage from within the pipeline into the surrounding soil.

The interconnections between successive pipes may be by means of sleeve couplings between two double spigot-ended or plain-ended pipes, or alternatively made, for example, by means of spigots and sockets incorporated integrally at alternate ends of a pipe.

Since market demand for jacking pressure pipes is usually low, it is not unusual to utilise pipes of a standard fluid carrying high pressure nature, such as ductile iron pipes of the spigot and socket type, for jacking purposes. Such pipes are, of course, of a mass produced nature and therefore relatively inexpensive.

Such "standard" pipes are converted to jacking usage by providing them with an external coating or sleeve, usually of concrete, to give a constant external diameter. However, the primary requirement of jacking pipes over and above the requirements of "standard" high pressure fluid carrying pipes is that the pipes be capable of withstanding considerable stress caused by the driving force moving them through the bore in the soil and the frictional resistance of the sides of the bore to that movement. This is particularly pertinent at the joints between two pipes, where the necessity of transferring the jacking force across the junction between the pipes, without damage to the joints presents a particularly challenging difficulty to overcome.

Pipes with spigot and socket joints of a standard kind such as that widely known and used under the Registered Trade Mark "TYTON" are typical of "standard" spigot and socket high pressure pipes used for jacking purposes. In these the socket essentially comprises a bell-like formation at one end of the pipe. Various methods have been used to transfer the jacking force across the joint between two pipes, and quite commonly this is by means of contact between the axial face of the concrete sleeve about the spigot of one pipe and the axial faces of the socket and the concrete sleeve about the socket of the other pipe. However, such an arrangement has disadvantages in that the full load bearing capacity of the concrete cannot be realised because the bell-like iron socket produces hoop stresses in the concrete during jacking which are easily capable of producing premature failure of the concrete sleeve.

In addition, with the use of standard pipes, it is to be noted that quite frequently they have lengths which are greater than those required for pipe jacking which currently, in what is known as "micro-tunnelling", typically is of the order of between 1 and 1.5 metres per pipe. Quite clearly, the economics of the provision of jacking pipes from "standard" pressure pipes is reduced considerably if standard length pipes have to be cut down in length to be of use.

It is an object of the present invention to overcome or at least substantially reduce the above-mentioned problems and disadvantages.

In accordance with one aspect of the present invention, there is provided a jacking pipe having a socket provided with an internal groove for the receipt of a sealing gasket capable of providing a seal between the internal wall of the socket and the external wall of a further plain-ended pipe spigot inserted into the open end of the socket, the wall of the socket being provided along its length with a wall thickness sufficiently strong for its purposes of receiving and sealing therein a pipe spigot and carrying within the pipework fluid at a high pressure, wherein the outer periphery of the wall of the socket increases in diameter in incremental step walls between which the radially outer wall of the socket is generally parallel to the longitudinal axis thereof, the changes in diameter of the outer periphery of the wall of the socket being carried out by means of step walls substantially normal to said axis.

The socket may be an integral part of the pipe or may be an initially separate socket member weldable to a plain ended pipe, for example.

The pipe may be provided with a sleeve, preferably of concrete, disposed thereabout extending along its length and of generally constant external diameter.

In accordance with another aspect of the present invention, there is provided a jacking pipe socket comprising a socket member weldable to the end of a plain-ended pipe, the socket member being provided with an internal annular groove for the receipt of a sealing gasket capable of providing a seal between the internal wall of the socket and the external wall of a further plain-ended pipe spigot inserted into the open end of the socket member, the wall of the socket member being provided along its length with a thickness sufficiently strong for its purposes of receiving and sealing therein a pipe spigot and carrying within the pipework fluid at high pressure, wherein the outer periphery of the wall of the socket increases in diameter in incremental step walls between which the radially outer wall of the socket is generally parallel to the longitudinal axis thereof, the changes in diameter of the outer periphery of the wall of the socket being carried out by means of step walls substantially normal to said axis.

The socket member may be butt welded to the end of the pipe or may be weldable about the end of the pipe, the socket member having an internal diameter adapted to correspond to the external diameter of the plain-ended pipe.

By means of the invention, we have found that to a surprising extent, the hoop stress developed by the jacking force in the sleeve about the socket is greatly reduced, so that a concrete sleeve about the socket does not exhibit any significant tendency to premature failure.

A radially outwardly extending flange may be provided at the open end of the socket, abutting the end of the concrete sleeve about the socket. This flange assists in transferring the jacking force to the concrete sleeve around the socket with the minimum of load concentration, especially when the joint is deflected; helps protect the concrete sleeve about the socket from damage due to handling; and assists ease of manufacture when casting the concrete sleeve.

The invention includes within its scope, a joint between jacking pipes incorporating a socket as hereinbefore defined.

The line of weld around the plain-ended pipe and the socket may be produced such that it is less of a curved configuration (as one would normally find) and instead closely follows a configuration having one free wall generally parallel to the axis of the pipe, and one free wall generally normal to that axis, all of this being so as to reduce the hoop stress in the concrete sleeve during jacking.

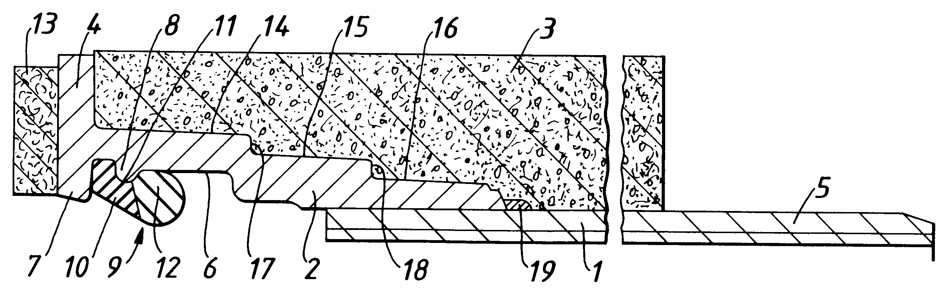

In order that the invention may be more readily understood, one embodiment thereof will now be described by way of example with reference to the accompanying drawing which shows in section part of a jacking pipe incorporating a socket in accordance with the invention.

Referring now to the drawing it will be seen that a plain-ended ductile pipe 1 of the required length for jacking purposes is welded at one end to a socket member 2 having an internal diameter compared to the external diameter of the end of the pipe such as to fit closely thereabout.

The pipe 1, and the socket 2 are provided with an external sleeve 3 of concrete which, so far as the socket 2 is concerned extends up to a terminal outwardly directed flange 4, whilst at a spigot end 5 of the pipe, the sleeve 3 extends as far as necessary to permit full insertion of that spigot end into the socket member of the next adjacent pipe to form a seal but with sufficient space between that spigot end and the socket member of that next adjacent pipe for joint deflection.

The internal configuration of the socket member is, as can be seen, similar in configuration to the pipe socket commonly and widely sold and used under the name of "TYTON" (Registered Trade Mark). Thus, the socket has an internal groove 6 around its internal wall, and is provided with an inwardly extending terminal flange 7 continuing from the corresponding outwardly extending terminal flange 4. Within the groove adjacent the axially outer end thereof is a generally semi-circular section protrusion 8. Located within the groove 6 is a dual hardness gasket 9. The axially outer portion 10 of the gasket (of harder rubber construction) is positively located by the base of the groove 6, the inner wall of the inwardly extending flange 7, and, by means of a slot 11 around its external surface, the inwardly extending protrusion 8 from the base of the groove. The axially inwardly portion 12 of the gasket (of softer more resilient construction) is intended to be heavily compressed by an incoming spigot end of the next adjacent pipe for sealing purposes between the inner wall of the socket and the outer wall of the spigot.

It is to be observed that a packing 13 formed for example of fibre board, is adherred to the axially outer end of the socket flanges 4 and 7 against which the concrete sleeve of the next adjacent pipe spigot end engages so as to help distribute the jacking force when the pipes are misaligned.

To provide sufficent strength for its sealing and pressure requirements, the socket member 2 is provided along its length with an appropriate wall thickness. In view of the variations in internal dimensions of the socket, as can be seen from the drawing, this requires variations in the external diameter of the socket member. As can be seen, and as is most important, a plurality of clearly distinguishable portions (three in this embodiment 14,15,16) of the socket member are provided having substantially different outer diameters, these portions each being substantially parallel with the longitudinal axis of the socket member, and being joined to each other by means of step walls 17,18 substantially normal to the axis of the socket. In addition, it is to be noted that the weld 19 connecting the socket member 2 to the pipe 1 is configured such that its free walls are again generally parallel to the axis of the socket and normal thereto respectively. By means of this disposition of the surfaces along the outer wall of the socket member, very little hoop stress is produced in the concrete surrounding the socket member during jacking, so that there is little, if any, tendency of the concrete at this area to fail prematurely.

It is to be understood that the foregoing is merely exemplary of sockets for jacking pipes, jacking pipes incorporating such sockets, and joints of jacking pipes, in accordance with the invention, and that modifications can readily be made thereto without departing from the true scope of the invention.

## Claims

1. A jacking pipe having a socket (2) provided with an internal groove (6) for the receipt of a sealing gasket (9) capable of providing a seal between the internal wall of the socket (2) and the external wall of a further plain-ended pipe spigot inserted into the open end of the socket (2), the wall of the socket (2) being provided along its length with a wall thickness sufficiently strong for its purposes of receiving and sealing therein a pipe spigot and carrying within the pipework fluid at a high pressure, wherein the outer periphery of the wall of the socket (2) increases in diameter in incremental step walls (17,18) between which the radially outer wall (14,15,16) of the socket is generally parallel to the longitudinal axis thereof, the changes in diameter of the outer periphery of the wall of the socket being carried out by means of step walls (17,18) substantially normal to said axis.

2. A jacking pipe as claimed in Claim 1 characterised in that the socket (2) is an integral part of the pipe.

3. A jacking pipe as claimed in Claim 1 characterised in that the socket (2) is an initially separate socket member (2) weldable to a plain ended pipe (1).

4. A jacking pipe as claimed in Claim 1 characterised in that the socket member (2) is butt welded to the end of the plain ended pipe.

5. A jacking pipe as claimed in Claim 3 characterised in that the socket member (2) is welded about the end of the plain ended pipe (1) and has an internal diameter arranged to correspond to the external diameter of the plain-ended pipe (1).

6. A jacking pipe as claimed in any one of the preceding claims characterised by a sleeve (3) disposed therabout extending along its length and of generally constant external diameter.

7. A jacking pipe as claimed in claim 6 characterised by a radially outwardly extending flange (4) provided at the open end of the socket (2), abutting the end of the sleeve (3) about the socket.

8. A jacking pipe socket comprising a socket member (2) weldable to the end of a plain-ended pipe (1), the socket member (2) being provided with an internal annular groove (6) for the receipt of a sealing gasket (9) capable of providing a seal between the internal wall of the socket (2) and the external wall of a further plain-ended pipe spigot inserted into the open end of the socket member (2), the wall of the socket member (2) being provided along its length with a thickness sufficiently strong for its purposes of receiving and sealing therein a pipe spigot and carrying within the pipework fluid at high pressure, wherein the outer periphery of the wall of the socket increases in diameter in incremental step walls (17,18) between which the radially outer wall (14,15,16) of the socket (2) is generally parallel to the longitudinal axis thereof, the changes in diameter of the outer periphery of the wall of the socket being carried out by means of step walls (17, 18) substantially normal to said axis.

9. A joint between jacking pipes incorporating a socket (2) as claimed in Claim 8.

## Patentansprüche

1. Heberohr mit einem Rohrstutzen (2), der mit einer inneren Rille (6) zur Aufnahme einer Dichtung (9) versehen ist, die eine Abdichtung zwischen der inneren Wand des Rohrstutzens (2) und der äußeren Wand eines weiteren, in das offene Ende des Rohrstutzens (2) gesteckten Glattrohrschafts vorsehen kann, wobei die Wand des Rohrstutzens (2) entlang ihrer Länge eine Wandstärke aufweist, die für seine Zwecke ausreicht: das Aufnehmen und Abdichten eines Rohrschafts in ihm und das Tragen von unter hohem Druck stehender Flüssigkeit innerhalb der Verrohrung, wobei der Durchmesser des Außenumfangs der Wand des Rohrstutzens (2) in schrittweisen Wandstufen (17, 18) zunimmt, zwischen denen die radial äußere Wand (14, 15, 16) des Rohrstutzens allgemein parallel zu ihrer Längsachse liegt, wobei die Änderungen des Durchmessers des Außenumfangs der Rohrstutzenwand mittels im wesentlichen normal zur genannten Achse liegender Wandstufen (17, 18) ausgeführt sind.

2. Heberohr nach Anspruch 1, dadurch gekennzeichnet, daß der Rohrstutzen (2) ein Bestandteil des Rohres ist.

3. Heberohr nach Anspruch 1, dadurch gekennzeichnet, daß der Rohrstutzen (2) ein anfänglich separates, an ein Glattrohr (1) anschweißbares Rohrstutzenelement (2) ist.

4. Heberohr nach Anspruch 1, dadurch gekennzeichnet, daß das Rohrstutzenelement (2) an das Ende des Glattrohrs stumpfgeschweißt ist.

5. Heberohr nach Anspruch 3, dadurch gekennzeichnet, daß das Rohrstutzenelement (2) am Ende des Glattrohrs (1) angeschweißt ist und einen Innendurchmesser hat, der dem Außendurchmesser des Glattrohrs (1) entsprechend angeordnet ist.

6. Heberohr nach einem der vorangehenden Ansprüche, gekennzeichnet durch eine Muffe (3), die entlang ihrer Länge um es herum angeordnet ist und einen allgemein konstanten Außendurchmesser hat.

7. Heberohr nach Anspruch 6, gekennzeichnet durch einen sich radial nach außen erstreckenden, am offenen Ende des Rohrstutzens (2) vorgesehenen Flansch (4), der um den Rohrstutzen herum am Ende der Muffe (3) anstößt.

8. Heberohr umfassend ein an das Ende eines Glattrohrs (1) anschweißbares Rohrstutzenelement (2), wobei das Rohrstutzenelement (2) eine innere ringförmige Rille (6) zur Aufnahme einer Dichtung (9) aufweist, die eine Abdichtung zwischen der inneren Wand des Rohrstutzens (2) und der äußeren Wand eines weiteren, in das offene Ende des Rohrstutzens (2) gesteckten Glattrohrschafts vorsehen kann, wobei die Wand des Rohrstutzens (2) entlang ihrer Länge eine Wandstärke aufweist, die für seine Zwecke ausreicht: das Aufnehmen und Abdichten eines Rohrschafts in ihm und das Tragen von unter hohem Druck stehender Flüssigkeit innerhalb der Verrohrung, wobei der Durchmesser des Außenumfangs der Wand des Rohrstutzens (2) in schrittweisen Wandstufen (17, 18) zunimmt, zwischen denen die radial äußere Wand (14, 15, 16) des Rohrstutzens allgemein parallel zu ihrer Längsachse liegt, wobei die Änderungen des Durchmessers des Außenumfangs der Rohrstutzenwand mittels im wesentlichen normal zur genannten Achse liegenden Wandstufen (17, 18) ausgeführt sind.

9. Verbindung zwischen Heberohren, die einen Rohrstutzen (2) nach Anspruch 8 aufweist.

## Revendications

1. Un tube de levage possédant un embout femelle (2) muni d'une rainure interne (6) destinée à recevoir une garniture d'étanchéité (9) capable de constituer un joint entre la paroi interne de l'embout femelle (2) et la paroi externe d'une autre extrémité mâle d'un tuyau à bouts plans introduit dans l'extrémité ouverte de l'embout femelle (2), la paroi de l'embout femelle (2) ayant sur toute sa longueur une épaisseur suffisamment forte afin d'y recevoir et d'y rendre étanche l'extrémité mâle d'un tuyau, et acheminant à l'intérieur de la tubulure un liquide sous pression élevée, dans laquelle la périphérie externe de la paroi de l'embout femelle (2) augmente en diamètre par parois à échelons incrémentiels (17, 18) entre lesquels la paroi externe radiale (14, 15, 16) de l'embout femelle est généralement parallèle à l'axe longitudinal de celui-ci, les changements de diamètre de la périphérie externe de la paroi de l'embout femelle étant réalisés par l'intermédiaire de parois à échelons (17, 18) essentiellement normales par rapport audit axe.

2. Un tube de levage, selon les stipulations de la revendication 1, caractérisé en ce que l'embout femelle (2) constitue une part intégrante du tube.

3. Un tube de levage, selon les stipulations de la revendication 1, caractérisé en ce que l'embout femelle (2) constitue initialement un élément embout femelle individuel (2) soudable à un tuyau à bouts plans (1).

4. Un tube de levage, selon les stipulations de la revendication 1, caractérisé en ce que l'élément embout femelle (2) est soudé bout à bout sur l'extrémité du tuyau à bouts plans.

5. Un tube de levage, selon les stipulations de la revendication 3, caractérisé en ce que l'élément embout femelle (2) est soudé autour de l'extrémité du tuyau à bouts plans (1) et possède un diamètre interne agencé de manière à correspondre au diamètre externe du tuyau à bouts plans (1).

6. Un tube de levage, selon les stipulations de l'une quelconque des revendications précédentes, caractérisé en ce qu'un manchon (3) disposé autour de celui-ci se prolongeant sur toute sa longueur et ayant généralement un diamètre externe constant.

7. Un tube de levage, selon les stipulations de la revendication 6, caractérisé par une bride se prolongeant vers l'extérieur dans un plan radial (4) prévue à l'extrémité ouverte de l'embout femelle (2), aboutant l'extrémité du manchon (3) autour de la douille.

8. Un embout femelle de tube de levage comportant un élément embout femelle (2) soudable sur l'extrémité d'un tuyau à bouts plans (1), l'élément embout femelle (2) étant muni d'une rainure annulaire interne (6) destinée à recevoir une garniture d'étanchéité (9) capable de constituer un joint entre la paroi interne de l'embout femelle (2) et la paroi externe d'une autre extrémité mâle d'un tuyau à bouts plans introduit dans l'extrémité ouverte de l'embout femelle (2), la paroi de l'élément embout femelle (2) ayant sur toute sa longueur une épaisseur suffisamment forte afin d'y recevoir et d'y rendre étanche l'extrémité mâle d'un tuyau, et acheminant à l'intérieur de la tubulure un liquide sous pression élevée, dans laquelle la périphérie externe de la paroi de l'embout femelle augmente en diamètre par parois à échelons incrémentiels (17, 18) entre lesquels la paroi externe radiale (14, 15, 16) de l'embout femelle (2) est généralement parallèle à l'axe longitudinal de celui-ci, les changements de diamètre de la périphérie externe de la paroi de l'embout femelle étant réalisés par l'intermédiaire de parois à échelons (17, 18) essentiellement normales par rapport audit axe.

9. Un raccord entre les tubes de levage comportant un embout femelle (2) selon les stipulations de la revendication 8.
